# EUROPEAN PATENT SPECIFICATION

(11) **EP 1 746 529 B1**
(45) Date of publication and mention of the grant of the patent: **06.02.2008**
(21) Application number: 05717190.2
(22) Date of filing: 03.03.2005
(51) Int. Cl.: G06K 19/07

(54) **SMART CARD AND METHOD AND SYSTEM FOR AUTHENTICATION THEREOF**
CHIPKARTE UND VERFAHREN UND SYSTEM ZU IHRER AUTHENTIFIKATION
CARTE A PUCE, PROCEDE ET SYSTEME D'AUTHENTIFICATION DE CELLE-CI

(30) Priority: 29.03.2004 ES 200400763
(43) Date of publication of application: 24.01.2007
(73) Proprietor: Microelectronica Española, S.A.U., 28002 Madrid (ES)
(72) Inventor: CRESPO GONZALEZ, Alfonso, E-28002 Madrid (ES); MARTIN MARTINEZ, Oscar, E-28002 Madrid (ES); CAÑIS ROBLES, Javier, E-28002 Madrid (ES)
(74) Representative: Carpintero Lopez, Francisco
(86) International application number: PCT/ES2005/000106
(87) International publication number: WO 2005/093642

(56) References cited:
- EP-A2- 1 329 843
- US-A- 6 111 506

## Description

### OBJECT OF THE INVENTION

The present invention relates to recording media-based high security environments provided with an integrated circuit. More specifically, the invention relates to high security environments wherein smart cards are used, and has the purpose of preventing the falsification of smart cards and, consequently, increasing the security level of said cards and of the environment wherein they are used.

The invention provides means to unequivocally link the passive security elements and the active security elements these types of smart cards conventionally have, so that the invention manages to eliminate the possibility that said passive and active security elements are illicitly exchanged, and thus avoid identity theft.

### BACKGROUND OF THE INVENTION

Smart cards are very widely used in our society for multiple applications such as identification of people or entities, control of access to buildings, financial transactions etc. These types of cards are comprised of a sheet of plastic material of standard dimensions and incorporate an integrated circuit wherein information is stored and they have capacity for processing and communication with an external processing terminal. This type of communication is performed securely by applying cryptographic processes that guarantee the authentication, confidentiality and integrity of the data transferred.

Additionally, smart cards usually contain elements of graphic identification such as photographs, graphic characters, holograms etc., which contribute to identifying the card owner and increasing its security level. The combination of these two types of elements, i.e. the graphic elements and the integrated circuit, provides a considerable increase in card security and, therefore, of the security environment wherein it is used.

Nevertheless, there is the potential risk that a smart card may be falsified by extracting the integrated circuit of an authentic card and then implanting it in another card, in which case the illicit identity theft of the holder of the falsified card would occur.

US-A- 6 111 506 describes storage of encrypted biometric data in a contactless chip provided in an identification document. Corresponding biometric data is derived from the person presenting the document (e.g. by a retina scanner) and is compared with biometric data read from the chip of the document.

EP-A- 1 329 843 teaches incorporation of an anti-counterfeit chip in a passport. The chip contains image data representing the photograph printed on the particular passport. The data is read by a chip reader for display and the displayed image can be visually compared with the photograph in the passport.

### DESCRIPTION OF THE INVENTION

The present invention has the object of increasing the security level of smart cards and, therefore, the high security environments wherein they are used as authentication elements, providing means that unequivocally link the different security elements the smart card is provided with and, therefore, prevent a fraudulent exchange thereof.

More specifically, a first aspect of the invention relates to an authentication smart card conventionally provided with a type of Active Security (AS) and a type of Passive Security (PS), where the type of Active Security consists of processes and data contained in a processing unit, which are able to establish data communication with a terminal external to the smart card. This communication will preferably be performed securely, applying cryptographic processes that guarantee the authentication, confidentiality and integrity of the data transferred.

Furthermore, in the present invention, the type of Passive Security (PS) is defined as a set of graphic elements, or of another type, present in the card, which establish a connection link between the smart card and the person or entity that owns it, such as, for example, graphic symbols, numerical characters, names, photographs, holograms, representation of biometric data or any combination of these elements. These graphic or other types of elements should preferably be protected by printing techniques, or another type of technique, which hinder the falsification of the elements comprising the (PS).

The present invention unequivocally links both types of security (AS and PS) and therefore eliminates the possibility of exchanging the elements comprising the (AS) and (PS), thus avoiding the identity theft this would involve.

To produce this connection between the different security types, the smart card object of the invention incorporates means which allow data communication to be performed between the elements that comprise both security types (AS) and (PS). These means are called Verification Elements (VE) and allow the (AS) or third party elements to know to which person or entity the (PS) elements belong (PS).

(VE) are elements capable of storing data that characterize the (PS) and which may be read by other units. The data stored in the verification elements (VE) may be any type of information that identifies the (PS) elements, such as, for example data related to a photograph, with a name, hologram, the card owner's biometric data, an identification code etc.

The present invention includes the possibility that these elements (VE) contain processing units that guarantee greater security in the authentication occurring between the (VE) and the (AS).

The (VE) are indivisibly integrated with the physical medium which constitutes the card, so that the (VE) form an integral, indivisible part of the elements comprising the (PS), so that its extraction and/or theft is very difficult or impossible. The verification elements (VE) are sufficiently integrated with the (PS), for which reason it can be assumed that internal (PS) and (VE) form a single indivisible entity.

The passive security (PS) and active security (AS) elements are connected by data exchange between the (AS) and (VE) integrated in the (PS).

A smart card of the invention is defined by claim 1.

Communication between the verification elements (VE) and the active security elements (AS) may occur by a physical link that connects them electrically. Alternatively, this communication may occur aerially, e.g. by radio frequency, or it may even have both communication channels, the physical link and aerially. Said physical link may comprise, for example, a data bus.

The verification elements (VE) may comprise a microprocessor and a communications port electrically connected to said microprocessor and to said physical link. Alternatively, the verification elements (VE) may consist of a data memory and a communications port electrically connected to said memory and to the physical link. In another alternative embodiment, the verification elements (VE) may have a microprocessor and a data memory.

To allow radio frequency communication between the verification elements (VE) and the active security elements (AS), the (VE) have at least one antenna equipped to send and receive data, and which is electrically connected to the communications port of the microprocessor and/or the memory. Likewise, the (AS) will have at least one antenna that enables its aerial communication with the (VE).

The active security elements (AS) comprise at least one processing unit and means of communication which allow communication to be established with a processing unit external to the card. The processing unit is preferably an integrated circuit that comprises at least one microprocessor.

Another aspect of the invention relates to a smart card authentication method according to claims 16. The smart cards comprise a physical medium containing passive security elements (PS) that establish a connection between the card and its owner, and active security elements (AS) that have capacity for data storage and data communication with an external terminal, being designed to prevent the exchangeability of said (PS) and (AS) elements. The method comprises having verification elements (VE) with data storage capacity, indivisibly joined to the card's physical medium, and storing, in said verification elements (VE), data which identify the passive security elements (PS), establishing communication between the verification elements (VE) and the active security elements (AS) wherein mutual authentication is performed.

Communication between the verification elements (VE) and the active security elements (AS) occurs by a physical link which electrically connects both types of elements, aerially, or by a combination of both means.

In another alternative embodiment of the invention, the communication between the verification elements (VE) and the active security elements (AS), may not directly occur by a physical link or by radio frequency, but by a Link Unit (LU) consisting of a device or unit external to the card, and which may serve as a mere intermediary in the data exchange between the (VE) and the (AS), or may even participate in the verification of the correct correlation of data between the (VE) and the (AS).

The link between (AS) and the link unit (LU) may be physical, by electrical connection, or by an aerial connection. In turn, the link between the (VE) and the link unit may be physical, by an electrical connection, or an aerial connection.

The link unit (LU) is comprised of hardware and software, and is provided with an antenna for aerial communication with the (VE) and!or the (AS).

Therefore, another aspect of the invention relates to a smart card authentication system that comprises a physical medium containing passive security elements (PS) which establish a connection between the card and its owner, and active security elements (AS) which have capacity for data storage and data communication with an external terminal. The system is characterized in that the card comprises verification elements (VE) which form an indivisible part of the physical medium thereof and which store data which identify the passive security elements (PS) and a link unit (LU) which allows communication and data exchange between said verification elements (VE) and the active security elements (AS).

In the system, the link unit (LU) communicates with the active security elements (AS) by a physical link, by radio frequency or by a combination of both channels. Likewise, the link unit (LU) communicates with the passive security elements (PS) by a physical link, by radio frequency or by a combination of both channels.

In the system, the verification elements (VE) comprise a microprocessor and a communications port electrically connected to said microprocessor. Alternatively, the verification elements (VE) comprise a data memory and a communications port electrically connected to said memory.

For radio frequency communication, the verification elements (VE) comprise at least one antenna equipped to send and receive data, and which is electrically connected to the communications port of the microprocessor and/or to the memory. Likewise, the active security elements (AS) comprise at least one processing unit and means of communication which allows communication to be established with a processing unit external to the card and with the link unit (LU). The active security elements (AS) have at least one antenna which allows data exchange with the processing unit (LU).

Alternatively, the link unit (LU) may participate in the mutual verification between the (AS) and the (PS).

### DESCRIPTION OF THE DRAWINGS

To complement the description being made and with the object of aiding towards a better understanding of the characteristics of the invention, in accordance with a preferred example of embodiment thereof, a set of drawings is attached as an integral part of said description, wherein the following has been represented, with an illustrative, non-limiting character:
- Figure 1.-: shows a schematic diagram of the different elements which participate in the invention and wherein various embodiments and aspects of the invention are simultaneously represented.
- Figure 2.-: schematically shows an exploded cutaway view of the smart card of the invention in one of the possible embodiments.
- Figure 3.-: schematically shows an exploded cutaway view of the smart card of the invention in another of the possible embodiments.
- Figure 4.-: schematically shows an exploded cutaway view of the smart card of the invention in another of the possible embodiments.

### PREFERRED EMBODIMENT OF THE INVENTION

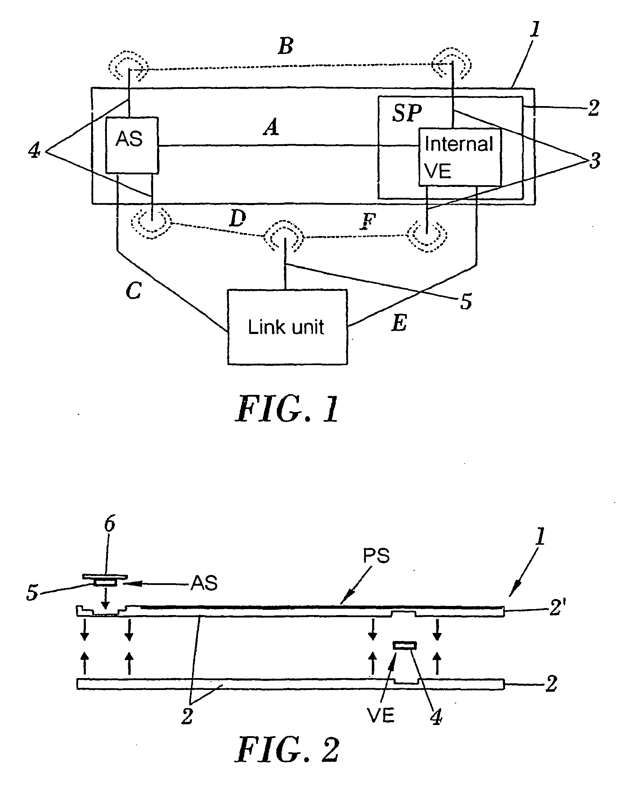

Figure 1 schematically represents a smart card (1) comprised of a physical medium (2) conventionally made of plastic material. The card (1) is provided with active security elements (AS), such as an integrated circuit which comprises a microprocessor, as well as passive security elements (PS), such as printed graphic symbols, numerical characters, names, photographs, holograms, representation of the card owner's biometric data or any combination of these elements.

Starting with this conventional configuration, the card is characterized in that it incorporates verification elements (VE) which are physically and indivisibly joined to the physical medium (2) of the card, i.e. they are indivisibly joined to the passive security elements (PS) by the physical medium (2).

The verification elements (VE) and the active security elements (AS) are in communication for the data exchange with the object of performing mutual authentication. Communication between both types of elements can be produced by a physical link (A), such as a data bus, or aerially (B), which may consist of radio frequency communication, for which purpose the verification elements (VE) have a first antenna (3) and the active security elements (AS) have a second antenna (4). In another preferred embodiment, the smart card (1) may simultaneously have both communication channels, i.e. a physical link (A) and an aerial channel (B). The link unit (LU) is comprised of hardware and software which allow these functions to be performed.

The invention also relates to an identity authentication system, for example for people, which has also been represented in figure 1. In this system the communication between the card's (1) (VE) and (AS) does not directly occur between them, instead it is performed by a link unit (LU), consisting of a unit external to the card with capacity for communication with both the (VE) and the (AS).

Communication between the (LU) and the (VE) can occur by a physical link (E), or by an aerial link (F) by radio frequency, or by both means. Similarly, communication between the (LU) and the (AS) may occur by a physical link (C) or by an aerial link (D) by radio frequency, or by both means. The link unit (LU) has an antenna (5) which enable its radio frequency communication with the (VE) and/or the (AS).

Figure 2 shows an example of embodiment of the smart card (1), wherein it can be seen that the physical medium (2) is comprised of an upper layer (2') and a lower layer (2"). The verification elements (VE) consist of an integrated circuit (4) which is located within the physical medium (2). The active security elements (AS) consist of an integrated circuit (5) provided with contacts (6) and it is positioned on one of the outer faces of the card. The passive security elements (PS) also have printing on one of the external faces of the card.

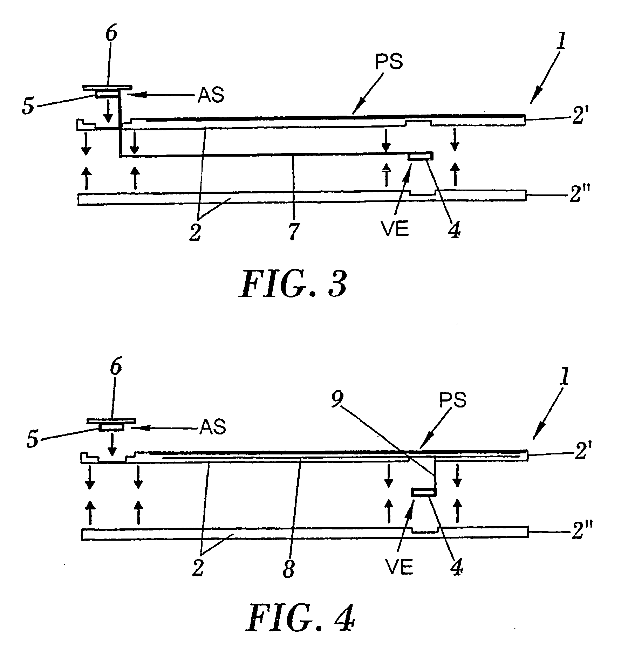

In another embodiment shown in figure 3, the card of figure 1 is complemented with a physical link consisting of a data bus and feed (7), which is also positioned inside the card between the upper layer (2') and the lower layer (2").

Figure 4 represents the same card, but provided with an antenna (8) connected to the integrated circuit (4) the (VE) comprise through a connection (9).

The verification elements can be fed by an electrical connection to an external source through the smart card contacts or, if there is an antenna, by the radio frequency waves received.

For aerial radio frequency communication between the different elements involved in the invention we can use the standards ISO/IEC 10536 (Identification Cards Contactless Integrated Circuit(s), Close Coupled Cards), ISO/IEC 14443 (Identification Cards Contactless Integrated Circuit(s), Proximity Cards) or ISO/IEC 15693 (Identification Cards Contactless Integrated Circuit(s), Vicinity Cards).

In view of this description and set of figures, the person skilled in the art will be able to understand that the embodiments of the invention which have been described may be combined in multiple forms within the object of the invention. The invention has been described according to preferred embodiments thereof, however, for the person skilled in the art it will be evident that multiple variations can be introduced in said preferred embodiments without departing from the invention as defined by the appended claims.

## Claims

1. Smart card which comprises a physical medium having passive security elements (PS) which establish a link between the card and its owner, and active security elements (AS) which have capacity for data storage and data communication with an external terminal, the smart card being designed to prevent the exchangeability of said passive (PS) and active (AS) security elements, **characterized in that** it comprises verification elements (VE) which store data that identify the passive security elements (PS), and means of communication which allow data exchange between said verification elements (VE) and the active security elements (AS), the verification elements (VE) forming an indivisible part of the card's physical medium.

2. Card according to claim 1, **characterized in that** the means of communication comprise at least one physical link that electrically connects the verification elements (VE) and the active security elements (AS).

3. Card according to claims 1 or 2, **characterized in that** the means of communication between the verification elements (VE) and the active security elements (AS) comprise aerial means of communication.

4. Card according to claim 3, **characterized in that** the aerial means of communication are means of communication by radio frequency.

5. Card according to any of the preceding claims, **characterized in that** the verification elements (VE) comprise a microprocessor and a communications port electrically connected to said microprocessor and to a physical link.

6. Card according to any of the preceding claims, **characterized in that** the verification elements (VE) comprise a data memory and a communications port electrically connected to said memory and to a physical link.

7. Card according to claim 5 or 6, **characterized in that** the physical link is a data bus.

8. Card according to any of the preceding claims, **characterized in that** the verification elements (VE) comprise at least one antenna adapted to send and receive data, and which is electrically connected to the communications port of the microprocessor and/or to the memory.

9. Card according to any of the preceding claims, **characterized in that** the physical medium is made of plastic material and is formed by one or more layers, and **in that** at least part of the verification elements (VE) are located in at least one of said internal layers.

10. Card according to any of the preceding claims, **characterized in that** the physical link is located in one of the internal layers of the card's physical medium.

11. Card according to any of the preceding claims, **characterized in that** the passive security elements (PS) are selected from: i) graphic symbols, ii) numerical characters, iii) names, iii) photographs, iv) holograms, v) representation of biometric data, vi) any combination of elements i to v.

12. Card according to any of the preceding claims, **characterized in that** the active security elements (AS) comprise at least one processing unit and means of communication which allow communication to be established with a processing unit external to the card.

13. Card according to claim 12, **characterized in that** the processing unit is an integrated circuit that comprises at least one microprocessor.

14. Card according to claim 12 or 13, **characterized in that** the active security elements (AS) have at least one antenna which allows data exchange with the verification elements (VE).

15. Smart card authentication method, wherein the smart cart comprises a physical medium having passive security elements (PS) that establish a connection between the card and its owner, and active security elements (AS) that have capacity for data storage and data communication with an external terminal, the smart card being designed to prevent the exchangeability of said passive (PS) and active (AS) security elements, the method being **characterized in that** it comprises:
providing verification elements (VE) with data storage capacity, indivisibly joined to the card's physical medium, and storing, in said verification elements (VE), data which identify the passive security elements (PS), and establish communication between the verification elements (VE) and the active security elements (AS) whereby mutual authentication is performed.

16. Method according to claim 15, **characterized in that** communication between the verification elements (VE) and the active security elements (AS) occurs by a physical link that electrically connects both types of elements.

17. Method according to claims 15 or 16, **characterized in that** communication between the verification elements (VE) and the active security elements (AS) directly occurs between them aerially.

18. Method according to claim 15, **characterized in that** communication between the verification elements (VE) and the active security elements (AS) occurs by a link unit (LU) consisting of a unit external to the card, and which has capacity for communication with the verification elements (VE) and the active security elements (AS).

19. Method according to claim 18, **characterized in that** the link unit (LU) communicates with the verification elements (VE) by a physical link or aerially.

20. Method according to claims 18 or 19, **characterized in that** the link unit (LU) communicates with the active security elements (AS) by a physical link or aerially.

21. Method according to any of the claims 18 to 20, **characterized in that** the link unit (LU) participates in the authentication process between the verification elements (VE) and the active security elements (AS).

22. Method according to any of claims 17 to 21, **characterized in that** the aerial communication is performed by radio frequency.

23. Method according to any of claims 15 to 18, **characterized in that** the verification elements (VE) are indivisibly joined to the card's physical medium by their insertion inside the physical medium.

24. Method according to any of claims 15 to 23, **characterized in that** cryptographic mechanisms are used in the communication between the verification elements (VE) and the active security elements (AS).

25. Identity authentication system based on the use of smart cards, said smart cards comprising a physical medium containing passive security elements (PS) which establish a connection between the card and its owner, and active security elements (AS) which have capacity for data storage and data communication with an external terminal, **characterized in that** the card comprises verification elements (VE) which form an indivisible part of the physical medium thereof and store data that identify the passive security elements (PS), the system comprising a link unit (LU) which allows communication and data exchange between said verification elements (VE) and the active security elements (AS) for mutual authentication.

26. System according to claim 25, **characterized in that** the link unit (LU) communicates with the active security elements (AS) by a physical link.

27. System according to claims 25 or 26, **characterized in that** the link unit (LU) communicates with the active security elements (AS) by radio frequency.

28. System according to any of claims 25 to 27, **characterized in that** the link unit (LU) communicates with the passive security elements (PS) by a physical link.

29. System according to claims 25 or 28, **characterized in that** the link unit (LU) communicates with the passive security elements (PS) by radio frequency.

30. System according to any of claims 25 to 29, **characterized in that** the verification elements (VE) comprise a microprocessor and a communications port electrically connected to said microprocessor.

31. System according to any of claims 25 to 30, **characterized in that** the verification elements (VE) comprise a data memory and a communications port electrically connected to said memory.

32. System according to any of claims 25 to 31, **characterized in that** the verification elements (VE) comprise at least one antenna equipped to send and receive data, and which is electrically connected to the communications port of the microprocessor and/or to the memory.

33. System according to any of claims 25 to 32 **characterized in that** the active security elements (AS) comprise at least one processing unit and means of communication which allow communication to be established with a processing unit external to the card and with the link unit (LU).

34. System according to claim 33 **characterized in that** the processing unit is an integrated circuit which comprises at least one microprocessor.

35. System according to claim 33 or 34 **characterized in that** the active security elements (AS) have at least one antenna which allows data exchange with the processing unit (LU).

## Patentansprüche

1. Chipkarte, die ein physikalisches Medium mit passiven Sicherheitselementen (PS), die einen Link zwischen der Karte und ihrem Besitzer herstellen, und aktiven Sicherheitselementen (AS) umfasst, die eine Kapazität für eine Datenspeicherung und Datenkommunikation mit einem externen Endgerät aufweisen, wobei die Chipkarte entworfen ist, um die Austauschbarkeit der passiven (PS) und aktiven (AS) Sicherheitselemente zu verhindern, **dadurch gekennzeichnet, dass** sie Verifikationselemente (VE), die Daten speichern, die die passiven Sicherheitselemente (PS) identifizieren, und ein Mittel zur Kommunikation umfasst, das einen Datenaustausch zwischen den Verifikationselementen (VE) und den aktiven Sicherheitselementen (AS) ermöglicht, wobei die Verifikationselemente (VE) einen untrennbaren Teil des physikalischen Mediums der Karte bilden.

2. Karte nach Anspruch 1, **dadurch gekennzeichnet, dass** das Mittel zur Kommunikation mindestens einen physikalischen Link umfasst, der die Verifikationselemente (VE) elektrisch mit den aktiven Sicherheitselementen (AS) verbindet.

3. Karte nach Anspruch 1 oder 2, **dadurch gekennzeichnet, dass** das Mittel zur Kommunikation zwischen den Verifikationselementen (VE) und den aktiven Sicherheitselementen (AS) ein Mittel zur Kommunikation über die Luft umfasst.

4. Karte nach Anspruch 3, **dadurch gekennzeichnet, dass** das Mittel zur Kommunikation über die Luft ein Mittel zur Kommunikation durch Hochfrequenz ist.

5. Karte nach einem der vorangehenden Ansprüche, **dadurch gekennzeichnet, dass** die Verifikationselemente (VE) einen Mikroprozessor und einen Kommunikationsport umfassen, der elektrisch mit dem Mikroprozessor und mit einem physikalischen Link verbunden ist.

6. Karte nach einem der vorangehenden Ansprüche, **dadurch gekennzeichnet, dass** die Verifikationselemente (VE) einen Datenspeicher und einen Kommunikationsport umfassen, der elektrisch mit dem Speicher und mit einem physikalischen Link verbunden ist.

7. Karte nach Anspruch 5 oder 6, **dadurch gekennzeichnet, dass** der physikalische Link ein Datenbus ist.

8. Karte nach einem der vorangehenden Ansprüche, **dadurch gekennzeichnet, dass** die Verifikationselemente (VE) mindestens eine Antenne umfassen, die geeignet ist, um Daten zu senden und zu empfangen, und die mit dem Kommunikationsport des Mikroprozessors und/oder dem Speicher elektrisch verbunden ist.

9. Karte nach einem der vorangehenden Ansprüche, **dadurch gekennzeichnet, dass** das physikalische Medium aus Kunststoffmaterial hergestellt ist und durch eine oder mehrere Schichten gebildet ist, und dass sich mindestens ein Teil der Verifikationselemente (VE) in mindestens einer der inneren Schichten befindet.

10. Karte nach einem der vorangehenden Ansprüche, **dadurch gekennzeichnet, dass** sich der physikalische Link in einer der inneren Schichten des physikalischen Mediums der Karte befindet.

11. Karte nach einem der vorangehenden Ansprüche, **dadurch gekennzeichnet, dass** die passiven Sicherheitselemente (PS) ausgewählt sind aus: i) Grafiksymbolen, ii) numerischen Zeichen, iii) Namen, iii) Fotos, iv) Hologrammen, v) einer Darstellung biometrischer Daten, vi) einer beliebigen Kombination der Elemente i bis v.

12. Karte nach einem der vorangehenden Ansprüche, **dadurch gekennzeichnet, dass** die aktiven Sicherheitselemente (AS) mindestens eine Verarbeitungseinheit und mindestens ein Mittel zur Kommunikation umfassen, die die Herstellung einer Kommunikation mit einer Verarbeitungseinheit außerhalb der Karte ermöglichen.

13. Karte nach Anspruch 12, **dadurch gekennzeichnet, dass** die Verarbeitungseinheit ein integrierter Schaltkreis ist, der mindestens einen Mikroprozessor umfasst.

14. Karte nach Anspruch 12 oder 13, **dadurch gekennzeichnet, dass** die aktiven Sicherheitselemente (AS) mindestens eine Antenne aufweisen, die einen Datenaustausch mit den Verifikationselementen (VE) ermöglicht.

15. Chipkartenauthentifizierungsverfahren, wobei die Chipkarte ein physikalisches Medium mit passiven Sicherheitselementen (PS), die eine Verbindung zwischen der Karte und ihrem Besitzer herstellen, und aktiven Sicherheitselementen (AS) umfasst, die eine Kapazität für eine Datenspeicherung und Datenkommunikation mit einem externen Endgerät aufweisen, wobei die Chipkarte entworfen ist, um die Austauschbarkeit der passiven (PS) und aktiven (AS) Sicherheitselemente zu verhindern, wobei das Verfahren **dadurch gekennzeichnet ist, dass** es umfasst, dass
Verifikationselemente (VE) mit einer Datenspeicherkapazität bereitgestellt werden, die untrennbar mit dem physikalischen Medium der Karte zusammengefügt sind, und in den Verifikationselementen (VE) Daten gespeichert werden, die die passiven Sicherheitselemente (PS) identifizieren und eine Kommunikation zwischen den Verifikationselementen (VE) und den aktiven Sicherheitselementen (AS) herstellen, wodurch eine gegenseitige Authentifizierung ausgeführt wird.

16. Verfahren nach Anspruch 15, **dadurch gekennzeichnet, dass** die Kommunikation zwischen den Verifikationselementen (VE) und den aktiven Sicherheitselementen (AS) durch einen physikalischen Link stattfindet, der beide Typen von Elementen elektrisch verbindet.

17. Verfahren nach Anspruch 15 oder 16, **dadurch gekennzeichnet, dass** die Kommunikation zwischen den Verifikationselementen (VE) und den aktiven Sicherheitselementen (AS) zwischen ihnen direkt über die Luft stattfindet.

18. Verfahren nach Anspruch 15, **dadurch gekennzeichnet, dass** die Kommunikation zwischen den Verifikationselementen (VE) und den aktiven Sicherheitselementen (AS) durch eine Link-Einheit (LU) stattfindet, die aus einer Einheit außerhalb der Karte besteht und die eine Kapazität für eine Kommunikation mit den Verifikationselementen (VE) und den aktiven Sicherheitselementen (AS) aufweist.

19. Verfahren nach Anspruch 18, **dadurch gekennzeichnet, dass** die Link-Einheit (LU) mit den Verifikationselementen (VE) durch einen physikalischen Link oder über Luft kommuniziert.

20. Verfahren nach Anspruch 18 oder 19, **dadurch gekennzeichnet, dass** die Link-Einheit (LU) mit den aktiven Sicherheitselementen (AS) durch einen physikalischen Link oder über Luft kommuniziert.

21. Verfahren nach einem der Ansprüche 18 bis 20, **dadurch gekennzeichnet, dass** die Link-Einheit (LU) an dem Authentifizierungsprozess zwischen den Verifikationselementen (VE) und den aktiven Sicherheitselementen (AS) teilnimmt.

22. Verfahren nach einem der Ansprüche 17 bis 21, **dadurch gekennzeichnet, dass** die Kommunikation über Luft durch Hochfrequenz ausgeführt wird.

23. Verfahren nach einem der Ansprüche 15 bis 18, **dadurch gekennzeichnet, dass** die Verifikationselemente (VE) durch ihre Einbringung in das Innere des physikalischen Mediums untrennbar mit dem physikalischen Medium der Karte zusammengefügt sind.

24. Verfahren nach einem der Ansprüche 15 bis 23, **dadurch gekennzeichnet, dass** kryptografische Mechanismen in der Kommunikation zwischen den Verifikationselementen (VE) und den aktiven Sicherheitselementen (AS) verwendet werden.

25. Identitätsauthentifikationssystem auf der Grundlage der Verwendung von Chipkarten, wobei die Chipkarten ein physikalisches Medium umfassen, das passive Sicherheitselemente (PS), die eine Verbindung zwischen der Karte und ihrem Besitzer herstellen, und aktive Sicherheitselemente (AS) enthält, die eine Kapazität für eine Datenspeicherung und Datenkommunikation mit einem externen Endgerät aufweisen, **dadurch gekennzeichnet, dass** die Karte Verifikationselemente (VE) umfasst, die einen untrennbaren Teil des physikalischen Mediums hiervon bilden und Daten speichern, die die passiven Sicherheitselemente (PS) identifizieren, wobei das System eine Link-Einheit (LU) umfasst, die eine Kommunikation und einen Datenaustausch zwischen den Verifikationselementen (VE) und den aktiven Sicherheitselementen (AS) für eine gegenseitige Authentifizierung ermöglicht.

26. System nach Anspruch 25, **dadurch gekennzeichnet, dass** die Link-Einheit (LU) mit den aktiven Sicherheitselementen (AS) durch einen physikalischen Link kommuniziert.

27. System nach Anspruch 25 oder 26, **dadurch gekennzeichnet, dass** die Link-Einheit (LU) mit den aktiven Sicherheitselementen (AS) durch Hochfrequenz kommuniziert.

28. System nach einem der Ansprüche 25 bis 27, **dadurch gekennzeichnet, dass** die Link-Einheit (LU) mit den passiven Sicherheitselementen (PS) durch einen physikalischen Link kommuniziert.

29. System nach Anspruch 25 oder 28, **dadurch gekennzeichnet, dass** die Link-Einheit (LU) mit den passiven Sicherheitselementen (PS) durch Hochfrequenz kommuniziert.

30. System nach einem der Ansprüche 25 bis 29, **dadurch gekennzeichnet, dass** die Verifikationselemente (VE) einen Mikroprozessor und einen Kommunikationsport umfassen, der elektrisch mit dem Mikroprozessor verbunden ist.

31. System nach einem der Ansprüche 25 bis 30, **dadurch gekennzeichnet, dass** die Verifikationselemente (VE) einen Datenspeicher und einen Kommunikationsport umfassen, der elektrisch mit dem Speicher verbunden ist.

32. System nach einem der Ansprüche 25 bis 31, **dadurch gekennzeichnet, dass** die Verifikationselemente (VE) mindestens eine Antenne umfassen, die ausgestattet ist, um Daten zu senden und zu empfangen, und die elektrisch mit dem Kommunikationsport des Mikroprozessors und/oder mit dem Speicher verbunden ist.

33. System nach einem der Ansprüche 25 bis 32, **dadurch gekennzeichnet, dass** die aktiven Sicherheitselemente (AS) mindestens eine Verarbeitungseinheit und mindestens ein Mittel zur Kommunikation umfassen, die die Herstellung einer Kommunikation mit einer Verarbeitungseinheit außerhalb der Karte und mit der Link-Einheit (LU) ermöglichen.

34. System nach Anspruch 33, **dadurch gekennzeichnet, dass** die Verarbeitungseinheit ein integrierter Schaltkreis ist, der mindestens einen Mikroprozessor umfasst.

35. System nach Anspruch 33 oder 34, **dadurch gekennzeichnet, dass** die aktiven Sicherheitselemente (AS) mindestens eine Antenne aufweisen, die einen Datenaustausch mit der Verarbeitungseinheit (LU) ermöglicht.

## Revendications

1. Carte à puce, comprenant un support physique ayant des éléments à sécurité passive (PS) établissant une liaison entre la carte et son propriétaire, et des éléments à sécurité active (AS) disposant d'une capacité pour le stockage de données et la communication de données avec un terminal externe, la carte à puce étant conçue pour empêcher l'interchangeabilité desdits éléments à sécurité passive (PS) et active (AS), **caractérisée en ce qu'**elle comprend des éléments de vérification (VE) stockant des données qui identifient les éléments à sécurité passive (PS), et des moyens de communication qui permettent un échange de données entre lesdits éléments de vérification (VE) et les éléments à sécurité active (AS), les éléments de vérification (VE) formant une partie indivisible du support physique de carte.

2. Carte selon la revendication 1, **caractérisée en ce que** les moyens de communication comprennent au moins une liaison physique, qui connecte électriquement les éléments de vérification (VE) et les éléments à sécurité active (AS).

3. Carte selon la revendication 1 ou 2, **caractérisée en ce que** les moyens de communication entre les éléments de vérification (VE) et les éléments à sécurité active (AS) comprennent des moyens de communication hertziens ou par ondes radio-électriques.

4. Carte selon la revendication 3, **caractérisée en ce que** les moyens de communication hertziens sont des moyens de communication par radiofréquence.

5. Carte selon l'une quelconque des revendications précédentes, **caractérisée en ce que** les éléments de vérification (VE) comprennent un microprocesseur et un port de communication, connecté électriquement audit microprocesseur et à une liaison physique.

6. Carte selon l'une quelconque des revendications précédentes, **caractérisée en ce que** les éléments de vérification (VE) comprennent une mémoire de données et un port de communication connecté électriquement à ladite mémoire et à une liaison physique.

7. Carte selon la revendication 5 ou 6, **caractérisée en ce que** la liaison physique est un bus de données.

8. Carte selon l'une quelconque des revendications précédentes, **caractérisée en ce que** les éléments de vérification (VE) comprennent au moins une antenne, adaptée pour envoyer et recevoir des données, et qui est connectée électriquement au port de communication du microprocesseur et/ou à la mémoire.

9. Carte selon l'une quelconque des revendications précédentes, **caractérisée en ce que** le support physique est formé d'un matériau plastique et est formé par une ou plusieurs couches, et **en ce qu'**au moins une partie des éléments de vérification (VE) sont situés en au moins l'une desdites couches internes.

10. Carte selon l'une quelconque des revendications précédentes, **caractérisée en ce que** la liaison physique est située sur l'une des couches internes du support physique de la carte.

11. Carte selon l'une quelconque des revendications précédentes, **caractérisée en ce que** les éléments à sécurité passive (PS) sont sélectionnés parmi : i) des symboles graphiques, ii) des caractères numériques, iii) des noms, iii) des photographies, iv) des hologrammes, v) une représentation de données biométriques, vi) toute combinaison d'éléments i à v.

12. Carte selon l'une quelconque des revendications précédentes, **caractérisée en ce que** les éléments à sécurité active (AS) comprennent au moins une unité de traitement et des moyens de communication permettant d'établir une communication avec une unité de traitement externe à la carte.

13. Carte selon la revendication 12, **caractérisée en ce que** l'unité de traitement est un circuit intégré qui comprend au moins un microprocesseur.

14. Carte selon la revendication 12 ou 13, **caractérisée en ce que** les éléments à sécurité active (AS) comprennent au moins une antenne, qui permet un échange de données avec les éléments de vérification (VE).

15. Procédé d'authentification de carte à puce, dans lequel la carte à puce comprend un support physique, ayant des éléments à sécurité passive (PS) établissant une connexion entre la carte et son propriétaire, et des éléments à sécurité active (AS), ayant une capacité de stockage de données et de communication de données avec un terminal externe, la carte à puce étant conçue pour empêcher l'interchangeabilité desdits éléments à sécurité passive (PS) et active (AS), le procédé étant **caractérisé en ce qu'**il comprend :
la fourniture d'éléments de vérification (VE) ayant une capacité de stockage de données, joints de façon indivisible au support physique de la carte, et le stockage, dans lesdits éléments de vérification (VE), de données qui identifient les éléments à sécurité passive (PS), et établissent une communication entre les éléments de vérification (VE) et les éléments à sécurité active (AS), de manière qu'une authentification mutuelle soit accomplie.

16. Procédé selon la revendication 15, **caractérisé en ce que** ladite communication entre les éléments de vérification (VE) et les éléments à sécurité active (AS) se produit par une liaison physique reliant électriquement les deux types d'éléments.

17. Procédé selon la revendication 15 ou 16, **caractérisé en ce que** la communication entre les éléments de vérification (VE) et les éléments à sécurité active (AS) se produit directement entre eux, de façon hertzienne.

18. Procédé selon la revendication 15, **caractérisé en ce que** la communication entre les éléments de vérification (VE) et les éléments à sécurité active (AS) se produit par une unité de liaison (LU) constituée d'une unité externe à la carte et ayant une capacité de communication avec les éléments de vérification (VE) et les éléments à sécurité active (AS).

19. Procédé selon la revendication 18, **caractérisé en ce que** l'unité de liaison (LU) communique avec les éléments de vérification (VE) par une liaison physique ou hertzienne.

20. Procédé selon la revendication 18 ou 19, **caractérisé en ce que** l'unité de liaison (LU) communique avec les éléments à sécurité active (AS) par une liaison physique ou hertzienne.

21. Procédé selon l'une quelconque des revendications 18 à 20, **caractérisé en ce que** l'unité de liaison (LU) participe au processus d'authentification entre les éléments de vérification (VE) et les éléments à sécurité active (AS).

22. Procédé selon l'une quelconque des revendications 17 à 21, **caractérisé en ce que** la communication hertzienne est effectuée par radiofréquence.

23. Procédé selon l'une quelconque des revendications 15 à 18, **caractérisé en ce que** les éléments de vérification (VE) sont joints de façon indivisible au support physique de la carte, de par leur insertion à l'intérieur du support physique.

24. Procédé selon l'une quelconque des revendications 15 à 23, **caractérisé en ce que** des mécanismes cryptographiques sont utilisés dans la communication entre les éléments de vérification (VE) et les éléments à sécurité active (AS).

25. Système d'authentification d'identité basé sur l'utilisation de cartes à puce, lesdites cartes à puce comprenant un support physique contenant des éléments à sécurité passive (PS) établissant une connexion entre la carte et son propriétaire, et des éléments à sécurité active (AS) ayant une capacité de stockage de données et de communication de données avec un terminal externe, **caractérisé en ce que** la carte comprend des éléments de vérification (VE), formant une partie indivisible de son support physique et stockant des données qui identifient les éléments à sécurité passive (PS), le système comprenant une unité de liaison (LU) permettant une communication et un échange de données, entre lesdits éléments de vérification (VE) et les éléments à sécurité active (AS), pour une authentification mutuelle.

26. Système selon la revendication 25, **caractérisé en ce que** l'unité de liaison (LU) communique avec les éléments à sécurité active (AS) par une liaison physique.

27. Système selon la revendication 25 ou 26, **caractérisé en ce que** l'unité de liaison (LU) communique avec les éléments à sécurité active (AS) par radiofréquence.

28. Système selon l'une quelconque des revendications 25 à 27, **caractérisé en ce que** l'unité de liaison (LU) communique avec les éléments à sécurité passive (PS), par une liaison physique.

29. Système selon la revendication 25 ou 28, **caractérisé en ce que** l'unité de liaison (LU) communique avec les éléments à sécurité passive (PS), par radiofréquence.

30. Système selon l'une quelconque des revendications 25 à 29, **caractérisé en ce que** les éléments de vérification (VE) comprennent un microprocesseur et un port de communication, connecté électriquement audit microprocesseur.

31. Système selon l'une quelconque des revendications 25 à 30, **caractérisé en ce que** les éléments de vérification (VE) comprennent une mémoire de données et un port de communication, connecté électriquement à ladite mémoire.

32. Système selon l'une quelconque des revendications 25 à 31, **caractérisé en ce que** les éléments de vérification (VE) comprennent au moins une antenne, équipée pour émettre et recevoir des données, et qui est électriquement connectée au port de communication du microprocesseur et/ou à la mémoire.

33. Système selon l'une quelconque des revendications 25 à 32, **caractérisé en ce que** les éléments à sécurité active (AS) comprennent au moins une unité de traitement et des moyens de communication qui permettent d'établir une communication avec une unité de traitement externe à la carte et avec l'unité de liaison (LU).

34. Système selon la revendication 33, **caractérisé en ce que** l'unité de traitement est un circuit intégré comprenant au moins un microprocesseur.

35. Système selon la revendication 33 ou 34, **caractérisé en ce que** les éléments à sécurité active (AS) ont au moins une antenne, permettant un échange de données avec l'unité de traitement (LU).
